# FASCICULE DE BREVET EUROPEEN

(11) **EP 3 672 193 B1**
(45) Date de publication et mention de la délivrance du brevet: **12.08.2026**
(21) Numéro de dépôt: 19211391.8
(22) Date de dépôt: 26.11.2019
(51) Int. Cl.: H04L 9/40, H04W 12/06, G06F 21/31

(54) **PROCÉDÉ ET SYSTÈME D'AUTHENTIFICATION D'UN TERMINAL CLIENT PAR UN SERVEUR CIBLE, PAR TRIANGULATION VIA UN SERVEUR D'AUTHENTIFICATION**
AUTHENTIFIZIERUNGSVERFAHREN UND -SYSTEM EINES KUNDENENDGERÄTS DURCH EINEN ZIELSERVER MITHILFE EINER TRIANGULATION ÜBER EINEN AUTHENTIFIZIERUNGSSERVER
METHOD AND SYSTEM FOR AUTHENTICATING A CLIENT TERMINAL BY A TARGET SERVER, BY TRIANGULATION VIA AN AUTHENTICATION SERVER

(30) Priorité: 18.12.2018 FR 1873245
(43) Date de publication de la demande: 24.06.2020
(73) Titulaire: Orange, 92130 Issy-les-Moulineaux (FR)
(72) Inventeur: DURO, Jean-Marc, 92326 Chatillon (FR)
(74) Mandataire: Vidon Brevets & Stratégie

(56) Documents cités:
- WO-A1-2013/040957
- CN-A- 108 711 209
- US-A1- 2018 150 631
- US-B1- 7 950 051

## Description

### 1. DOMAINE TECHNIQUE

Le domaine de l'invention est celui de la gestion des mots de passe dans le cadre des processus d'authentification.

Plus précisément, l'invention concerne un processus (procédé et système) d'authentification d'un terminal client (aussi appelé « client ») par un serveur cible (aussi appelé « serveur de ressource », « serveur d'applications » ou encore « serveur de service »), afin qu'une connexion sécurisée puisse être établie entre ces deux entités. Ainsi, après qu'il a été authentifié par le serveur cible, le terminal client va pouvoir accéder, via la connexion sécurisée, à une ressource hébergée par le serveur cible.

Par « terminal client », on entend tout type d'équipement (ordinateur, tablette, smartphone, etc.) pouvant être utilisé par un utilisateur pour accéder à des ressources (sites web, contenus, services, fonctionnalités, logiciels, applications, etc.) via une connexion sécurisée (par exemple selon le protocole HTTPS (HyperText Transfer Protocol Secure), le protocole SSL/TLS (Secure Sockets Layer / Transport Layer Security), etc.). Pour cela, le terminal client exécute par exemple un navigateur Internet ou un logiciel de type « client de téléchargement ».

Par « serveur cible », on entend tout type d'équipement (serveur, ordinateur, objet connecté, etc.) capable d'héberger des ressources et de les fournir à une autre entité (terminal client) après authentification de cette dernière.

### 2. ARRIÈRE-PLAN TECHNOLOGIQUE

Dans un monde toujours plus connecté, il existe de plus en plus de sites web, de services, de logiciels et d'applications nécessitant chacun une authentification de l'utilisateur (en général par la fourniture d'un couple « identifiant (login) / mot de passe » par l'utilisateur) pour accéder à du contenu ou à des fonctionnalités. Or, le fait de devoir mémoriser des dizaines de couples « identifiant (login) / mot de passe » est devenu une réelle contrainte pour les utilisateurs.

Déjà très complexe tant pour les utilisateurs que pour les concepteurs de serveurs cibles au sens précité (notamment les industriels fournisseurs d'objets connectés et les éditeurs de sites Web), la gestion des mots de passe se complexifie de jour en jour avec l'explosion du nombre d'objets connectés.

Il existe donc un problème pour les utilisateurs, qui ont du mal à gérer de façon sécurisée un grand nombre de mots de passe.

L'authentification unique (ou SSO, pour « Single Sign On ») constitue une solution connue à ce problème. C'est une méthode permettant à un utilisateur d'accéder à plusieurs serveurs cibles (par exemple des serveurs d'applications informatiques ou des sites web sécurisés) en ne procédant qu'à une seule authentification. Toute contrainte d'authentifications à répétition est ainsi éliminée. Quelle que soit la norme utilisée pour l'authentification unique (OpenID Connect, Facebook Connect, SAML, Compte Microsoft (anciennement appelé Passport), etc.), l'infrastructure sécurisée fait intervenir, entre le client et le serveur cible, un serveur d'authentification.

Comme détaillé sur la page URL *« https:*//*auth0.com*/*blog*/*what-is-and-how-does-single-sign-on-work*/ », l'authentification unique (SSO) repose sur une session partagée par plusieurs domaines et des jetons d'authentification signés (souvent sous forme de cookies) qui contiennent les informations nécessaires à la connexion. Plus précisément, l'utilisateur entre son identifiant (login) et son mot de passe afin d'obtenir un jeton qui lui permet d'accéder ensuite à des ressources spécifiques sans réutiliser son nom d'utilisateur et son mot de passe. Une fois que l'utilisateur a obtenu son jeton, celui-ci offre un accès à des ressources spécifiques pour une période de temps précise sur un ou plusieurs sites distants. En d'autres termes, le jeton permet d'ajouter un niveau d'authentification indirect au lieu d'avoir à se connecter avec l'identifiant (login) et le mot de passe pour chaque ressource protégée. De cette façon, l'utilisateur ne s'authentifie qu'une seule fois (dans une session d'une durée limitée), obtient en retour un jeton pour une durée limitée, et utilise ce jeton pour une authentification supplémentaire au cours de sa session.

Malheureusement, les industriels fournisseurs d'objets connectés et les éditeurs de sites Web ne peuvent pas tous se payer le prix d'une affiliation à un système d'authentification unique (SSO). En effet, la signature numérique des jetons d'authentification a un coût non négligeable.

Outre la solution de l'authentification unique (SSO), des solutions matérielles, souvent biométriques, commencent à voir le jour. Mais elles présentent l'inconvénient d'être dépendantes d'un type de terminal, même quand elles sont externes (par exemple via un port USB). La publication brevet US2018/150631A1 divulgue une méthode d'authentification d'un terminal client utilisant un serveur d'authentification pour gérer ses mots de passe.

### 3. RÉSUMÉ

Dans un mode de réalisation particulier de l'invention, il est proposé un procédé d'authentification d'un terminal client par un serveur cible, comprenant les étapes suivantes :
- le terminal client s'authentifie auprès d'un serveur d'authentification ;
- le serveur cible s'authentifie auprès du serveur d'authentification ;
- le serveur d'authentification et le serveur cible partagent un mot de passe pour le terminal client ;
- le serveur d'authentification transmet le mot de passe au terminal client ;
- le terminal client transmet le mot de passe au serveur cible ; et
- le serveur cible détermine s'il y a une correspondance ou non entre le mot de passe partagé avec le serveur d'authentification et le mot de passe transmis par le terminal client, et si ladite correspondance entre mots de passe existe, le terminal client est authentifié par le serveur cible.

Ainsi, la solution proposée propose une approche tout à fait nouvelle et inventive consistant à définir une forme d'authentification par délégation de service, reposant sur l'authentification d'un terminal client auprès d'un serveur cible par triangulation. On considère un triangle dont les sommets C, A et B sont respectivement le terminal client, le serveur cible et un serveur d'authentification. Le principe est le suivant : si les branches A-B et C-B sont des liens sécurisés (HTTPS, SSL, etc.) (c'est-à-dire si A et C se sont chacun authentifiés auprès de B), et si un échange d'informations d'identification uniques garantit à A que C est parfaitement identifié auprès de B (comme A l'est lui-même), alors C est considéré comme authentifié auprès de A (et A peut donc accepter une connexion sécurisée de C) si l'authentification de C est fournie par B. En d'autres termes, A délègue à B son authentification de C.

L'invention a la même finalité qu'un système d'authentification unique (SSO), à savoir permettre à l'utilisateur de ne s'authentifier qu'une seule fois pour se connecter à différents domaines. En effet, dans la solution proposée, pour s'authentifier auprès de plusieurs serveurs cibles, le terminal client s'authentifie une seule fois auprès du serveur d'authentification et chacun des serveurs cibles s'authentifie auprès du serveur d'authentification. Ainsi, chacun des serveurs cibles délègue au serveur d'authentification son authentification du terminal client.

Cependant, la comparaison s'arrête là : l'invention utilise des sessions distinctes (pas de session commune à plusieurs domaines) et il n'y a pas de jeton d'authentification signé. Le mécanisme d'authentification sur chaque domaine (c'est-à-dire auprès de chaque serveur cible) reste standard. Seule la gestion des mots de passe est déléguée au serveur d'authentification. Les mots de passe sont transmis sur des liens sécurisés (cryptés).

Un avantage de la solution proposée est que son coût de mise en œuvre est moindre car il n'y a pas de coût d'affiliation à un système d'authentification unique (SSO). Elle est donc particulièrement adaptée pour des sites web de faible taille, pour du résidentiel ou encore pour de l'intra-entreprise.

Un autre avantage est que seule la gestion des mots de passe étant déléguée à un serveur d'authentification, ce dernier n'a pas besoin de connaître l'identifiant (login) utilisé par l'utilisateur pour s'identifier auprès du serveur cible.

Encore un autre avantage est que l'architecture de la solution proposée étant simple, elle est adaptée à toute utilisation dans laquelle le serveur d'authentification est embarqué (par exemple, comme détaillé plus bas, sur une passerelle domestique aussi appelée « box Internet »).

Dans une implémentation particulière détaillée plus bas, les informations d'identification uniques échangées entre le terminal client, le serveur cible et le serveur d'authentification peuvent être une combinaison de données d'identification de personne (nom, prénom, adresse mail, téléphone, etc.), d'identification du matériel communicant utilisé pour la connexion (adresse IP, adresse MAC, numéro de série, etc.) et de codes à usage unique (UUID) générés pour la session. Chaque entité (sommet du triangle) met en corrélation les informations transmises par les deux autres entités (autres sommets du triangle) avec lesquelles elle est en relation.

En d'autres termes, la corrélation des données du client auprès du serveur cible et auprès du serveur d'authentification est permise par l'échange de données pérennes le concernant (aussi appelées plus haut « données d'identification de personne ») et son identification est garantie par un échange de données volatiles (aussi appelées plus haut « données d'identification du matériel communicant » et « codes à usage unique ») entre les trois composantes de la triangulation que sont le client, le serveur cible et le serveur d'authentification.

Dans une première implémentation, le procédé comprend en outre les étapes suivantes :
- le serveur cible demande ledit mot de passe au serveur d'authentification (B), pour le terminal client ; et
- le serveur d'authentification génère ledit mot de passe.

Dans cette première implémentation, le serveur cible est d'implémentation plus simple puisqu'il n'a pas à gérer la génération du mot de passe (celle-ci est effectuée par le serveur d'authentification).

Selon une caractéristique particulière de la première implémentation, l'étape dans laquelle le serveur cible demande ledit mot de passe au serveur d'authentification, fait suite à l'étape suivante : le terminal client s'identifie auprès du serveur cible, sans s'authentifier.

Ainsi, la solution est compatible avec un fonctionnement de type client/serveur, dans lequel rien n'est à l'initiative du serveur qui ne fait que répondre à des requêtes du client. En effet, c'est le terminal client qui déclenche les échanges entre le serveur cible et le serveur d'authentification, et ces échanges peuvent donc être automatisés.

Dans une deuxième implémentation, le procédé comprend les étapes suivantes :
- le serveur cible génère ledit mot de passe, pour le terminal client ; et
- le serveur cible transmet ledit mot de passe au serveur d'authentification.

Dans cette deuxième implémentation, le serveur d'authentification est d'implémentation plus simple puisqu'il n'a pas à gérer la génération du mot de passe (celle-ci est effectuée par le serveur cible).

Selon une caractéristique particulière, l'étape dans laquelle le serveur d'authentification transmet le mot de passe au terminal client, fait suite à l'étape suivante : le terminal client demande ledit mot de passe au serveur d'authentification.

Ainsi, la solution est compatible avec un fonctionnement de type client/serveur puisque le serveur d'authentification n'agit que sur demande du terminal client.

Selon une caractéristique particulière, le procédé comprend les étapes suivantes :
- le serveur cible génère un identifiant universel unique pour le terminal client et le transmet au serveur d'authentification;
- le serveur d'authentification transmet ledit identifiant universel unique au terminal client ;
- le terminal client envoie une requête au serveur d'authentification pour obtenir ledit mot de passe, ladite requête contenant ledit identifiant universel unique ;
- le serveur d'authentification vérifie s'il y a une correspondance ou non entre l'identifiant universel unique transmis par le terminal client et l'identifiant universel unique transmis par le serveur cible ;
et l'étape de transmission du mot de passe depuis le serveur d'authentification vers le terminal client n'est pas exécutée si ladite correspondance entre identifiants universels uniques n'existe pas.

De cette façon, on évite une attaque par une quatrième entité non autorisée, autre que le terminal client (C), le serveur cible (A) et le serveur d'authentification (B) (attaque de type « man in the middle »).

Selon une caractéristique particulière, le procédé comprend les étapes suivantes :
- le serveur d'authentification récupère et enregistre l'adresse IP du terminal client ;
- le serveur cible récupère et enregistre l'adresse IP du terminal client ;
- le serveur cible envoie l'adresse IP du terminal client au serveur d'authentification ;
- le serveur d'authentification compare l'adresse IP du terminal client provenant du serveur cible et l'adresse IP du terminal client préalablement enregistrée, et vérifie s'il y a une correspondance ou non ;
et une étape de transmission du mot de passe depuis le serveur d'authentification vers le serveur cible n'est pas exécutée si ladite correspondance entre adresses IP du terminal client n'existe pas.

De cette façon, le serveur d'authentification garantit au serveur cible que le terminal client qui souhaite s'authentifier auprès de lui est bien enregistré auprès du serveur d'authentification.

Selon une caractéristique particulière, le procédé comprend les étapes suivantes :
- le serveur d'authentification récupère et enregistre au moins une information d'identification du serveur cible ;
- le terminal client récupère et enregistre ladite au moins une information d'identification du serveur cible;
- le terminal client envoie une requête au serveur d'authentification pour obtenir ledit mot de passe, ladite requête contenant ladite au moins une information d'identification du serveur cible ;
- le serveur d'authentification vérifie s'il y a une correspondance ou non entre ladite au moins une information d'identification du serveur cible transmise par le terminal client et ladite au moins une information d'identification du serveur cible préalablement enregistrée ;
et l'étape de transmission du mot de passe depuis le serveur d'authentification vers le terminal client n'est pas exécutée si ladite correspondance entre informations d'identification du serveur cible n'existe pas.

De cette façon, le serveur d'authentification garantit au terminal client que serveur cible auprès de qui il souhaite s'authentifier est bien enregistré auprès du serveur d'authentification.

Selon une caractéristique particulière, ladite au moins une information d'identification du serveur cible appartient au groupe comprenant une adresse IP du serveur cible et une adresse URL du serveur cible.

Selon une caractéristique particulière, le procédé comprend les étapes suivantes :
- le serveur cible obtient au moins une information d'identification d'au moins un utilisateur dudit terminal client ;
- le serveur cible envoie une requête au serveur d'authentification pour obtenir ledit mot de passe, ladite requête contenant ladite au moins une information d'identification ;
- le serveur d'authentification vérifie, en fonction de ladite au moins une information d'identification transmise par le serveur cible, si le terminal client est enregistré ou non auprès du serveur d'authentification ;
et une étape de transmission du mot de passe depuis le serveur d'authentification vers le serveur cible n'est pas exécutée si le terminal client n'est pas enregistré auprès du serveur d'authentification.

De cette façon, le serveur d'authentification garantit au serveur cible que l'utilisateur du terminal client qui souhaite s'authentifier auprès de lui est bien enregistré auprès du serveur d'authentification.

Selon une caractéristique particulière, ledit mot de passe est un mot de passe à usage unique et à durée de validité prédéterminée.

L'utilisation d'un mot de passe à usage unique et à durée de validité prédéterminée (OTP, pour « One-Time Password ») permet d'éviter qu'une entité non autorisée réutilise ultérieurement le mot de passe pour s'authentifier auprès du même serveur cible.

Dans un autre mode de réalisation de l'invention, il est proposé un produit programme d'ordinateur qui comprend des instructions de code de programme pour la mise en œuvre du procédé précité (dans l'un quelconque de ses différents modes de réalisation), lorsque ledit programme est exécuté sur un ordinateur.

Dans un autre mode de réalisation de l'invention, il est proposé un médium de stockage lisible par ordinateur et non transitoire, stockant un programme d'ordinateur comprenant un jeu d'instructions exécutables par un ordinateur pour mettre en œuvre le procédé précité (dans l'un quelconque de ses différents modes de réalisation).

Dans un autre mode de réalisation de l'invention, il est proposé un système d'authentification d'un terminal client par un serveur cible, caractérisé en ce que :
- le terminal client comprend des moyens pour s'authentifier auprès d'un serveur d'authentification ;
- le serveur cible comprend des moyens pour s'authentifier auprès du serveur d'authentification ;
- le serveur d'authentification et le serveur cible comprennent des moyens pour partager un mot de passe pour le terminal client ;
- le serveur d'authentification comprend des moyens pour transmettre le mot de passe au terminal client ;
- le terminal client comprend des moyens pour transmettre le mot de passe au serveur cible ; et
- le serveur cible comprend des moyens pour déterminer s'il y a une correspondance ou non entre le mot de passe partagé avec le serveur d'authentification et le mot de passe transmis par le terminal client, le terminal client étant authentifié par le serveur cible si ladite correspondance entre mots de passe existe.

Avantageusement, les trois entités principales du système d'authentification (terminal client, serveur cible et serveur d'authentification) comprennent des moyens de mise en œuvre des étapes du procédé d'authentification tel que décrit précédemment, dans l'un quelconque de ses différents modes de réalisation.

### 4. LISTE DES FIGURES

D'autres caractéristiques et avantages de l'invention apparaîtront à la lecture de la description suivante, donnée à titre d'exemple indicatif et non limitatif, et des dessins annexés, dans lesquels :
**[****Fig. 1****]** illustre une première étape d'un procédé d'authentification selon un mode de réalisation de l'invention ;
**[****Fig. 2****]** illustre une deuxième étape d'un procédé d'authentification selon un mode de réalisation de l'invention ;
**[****Fig. 3****]** illustre une troisième étape d'un procédé d'authentification selon un mode de réalisation de l'invention ;
**[****Fig. 4****]** illustre une quatrième étape d'un procédé d'authentification selon un mode de réalisation de l'invention ;
**[****Fig. 5****]** illustre une cinquième étape d'un procédé d'authentification selon un mode de réalisation de l'invention ;
**[****Fig. 6****]** illustre une sixième étape d'un procédé d'authentification selon un mode de réalisation de l'invention ;
**[****Fig. 7****]** illustre une septième étape d'un procédé d'authentification selon un mode de réalisation de l'invention ;
**[****Fig. 8****]** illustre une huitième étape d'un procédé d'authentification selon un mode de réalisation de l'invention ;
**[****Fig. 9****]** illustre une neuvième étape d'un procédé d'authentification selon un mode de réalisation de l'invention ;
**[****Fig. 10****]** illustre une dixième étape d'un procédé d'authentification selon un mode de réalisation de l'invention ;
**[****Fig. 11****]** illustre une onzième étape d'un procédé d'authentification selon un mode de réalisation de l'invention ;
**[****Fig. 12****]** illustre des douzième, treizième, quatorzième et quinzième étapes d'un procédé d'authentification selon un mode de réalisation de l'invention ; et
**[****Fig. 13****]** présente un exemple de structure pour implémenter chacune des trois entités (terminal client, serveur cible et serveur d'authentification) impliquées dans le procédé d'authentification des figures 1 à 12.

### 5. DESCRIPTION DÉTAILLÉE

Sur toutes les figures du présent document, les éléments et étapes identiques sont désignés par une même référence numérique.

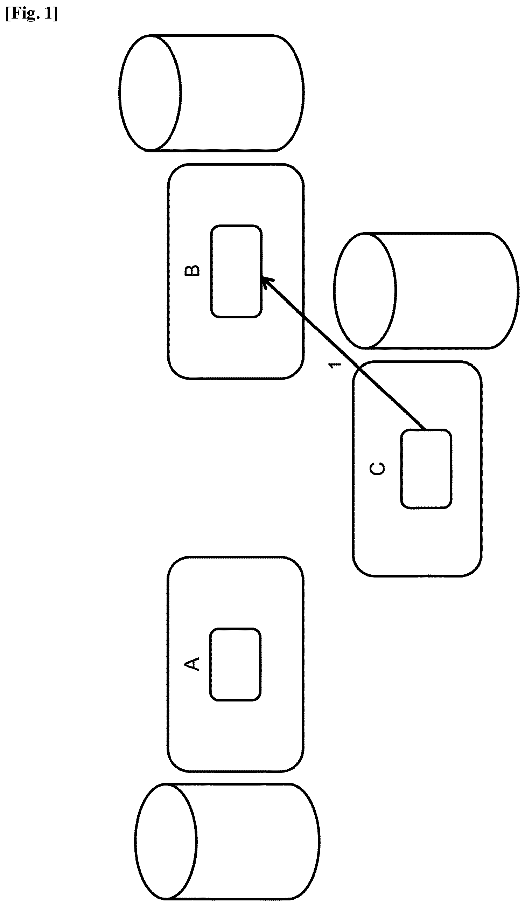

On présente maintenant, en relation avec les **figures 1 à 12****,** les différentes étapes d'un procédé d'authentification selon un mode de réalisation de l'invention.

Comme déjà mentionné plus haut, il s'agit d'un procédé d'authentification d'un terminal client (référencé C) par un serveur cible (référencé A), par triangulation via un serveur d'authentification (référencé B). Ces différentes entités ont déjà été définies plus haut.

Sur chacune des figures 1 à 12, chacune des trois entités impliquées (terminal client C, serveur cible A et serveur d'authentification B) est associée à un logo de base de données dans lequel sont indiquées les diverses informations enregistrées par cette entité, au fur et à mesure de l'avancement du procédé. Dans la suite de la description, les informations suivantes sont détaillées : « Client IP », « Partner URL », « Partner IP », « Client UUID » et « OTP ».

Dans une première étape (symbolisée par la flèche référencée 1 sur la **figure 1****),** le terminal client C s'authentifie auprès du serveur d'authentification B en vue de l'établissement entre eux d'une connexion sécurisée (lien sécurisé HTTPS, SSL, etc.). Plus précisément, un utilisateur du terminal client C fournit un identifiant (noté « login 1 ») et un mot de passe afin d'accéder à un service d'authentification fourni par le serveur d'authentification B. Si nécessaire, afin d'augmenter le niveau de cette authentification, le terminal client C peut fournir un ou plusieurs éléments d'authentification complémentaires, comme par exemple une clé RSA. Avec la solution proposée, cette authentification du terminal client C auprès du serveur d'authentification B est la seule fois où l'utilisateur a besoin de s'authentifier.

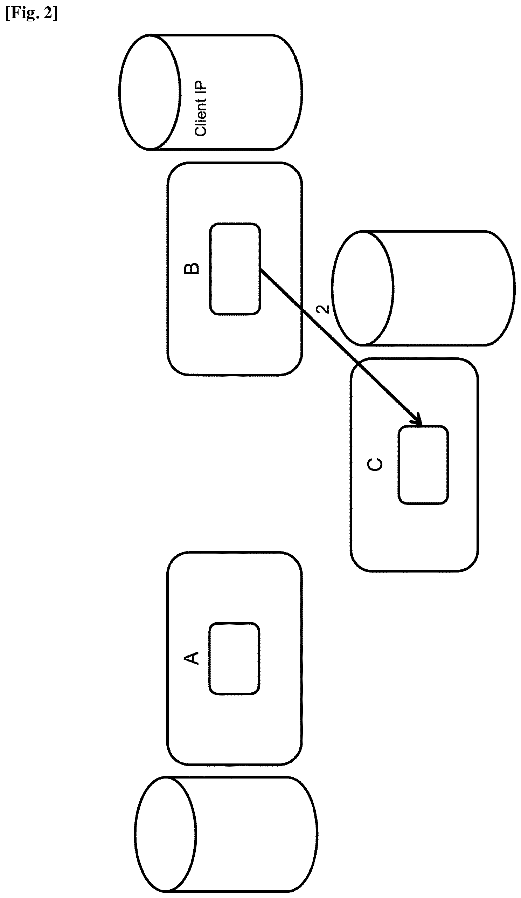

Dans une deuxième étape (symbolisée par la flèche référencée 2 sur la **figure 2****),** le serveur d'authentification B vérifie si l'utilisateur est enregistré ou non pour le service d'authentification, c'est-à-dire si le couple login/mot de passe fourni correspond ou non à un couple identique préalablement enregistré (par exemple lors d'une phase d'inscription de l'utilisateur à ce service d'authentification). En cas de vérification positive, le serveur d'authentification B renvoie un statut de connexion au terminal client C et enregistre l'adresse IP du terminal client C (notée « Client IP ») (donnée par le protocole IP dans le cadre de la connexion entre le serveur d'authentification B et le terminal client C). En cas de vérification négative, le présent procédé d'authentification par triangulation s'arrête.

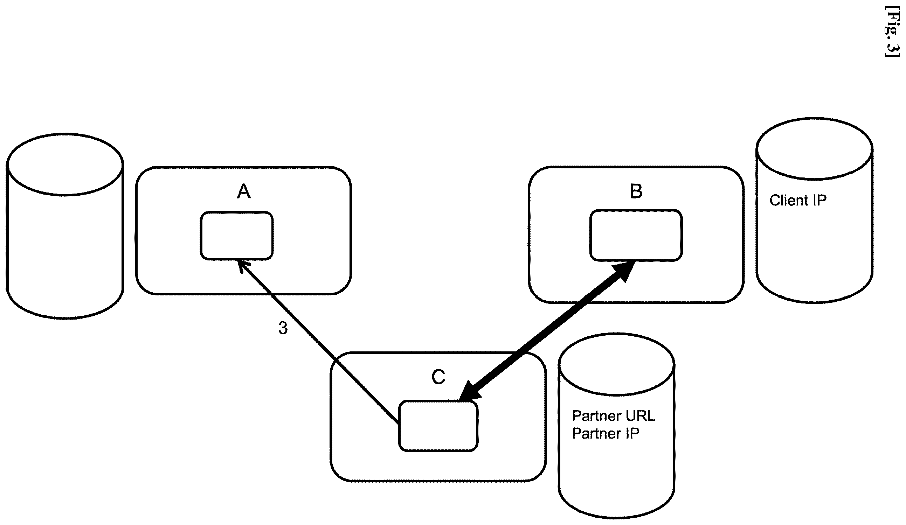

Dans une troisième étape (symbolisée par la flèche référencée 3 sur la **figure 3**), le terminal client C se connecte au serveur cible A, avec un identifiant (noté « login 2 », différent de l'identifiant « login 1 » utilisé pour s'authentifier auprès du serveur d'authentification B), mais sans mot de passe (c'est-à-dire sans élément d'authentification). Pour cela, le terminal client C connaît et utilise l'adresse URL (notée « Partner URL ») de la page de connexion dédiée du serveur cible A. Le terminal client C enregistre l'adresse IP du serveur cible A (notée « Partner IP »), donnée par le protocole IP dans le cadre de la connexion entre le terminal client C et le serveur cible A.

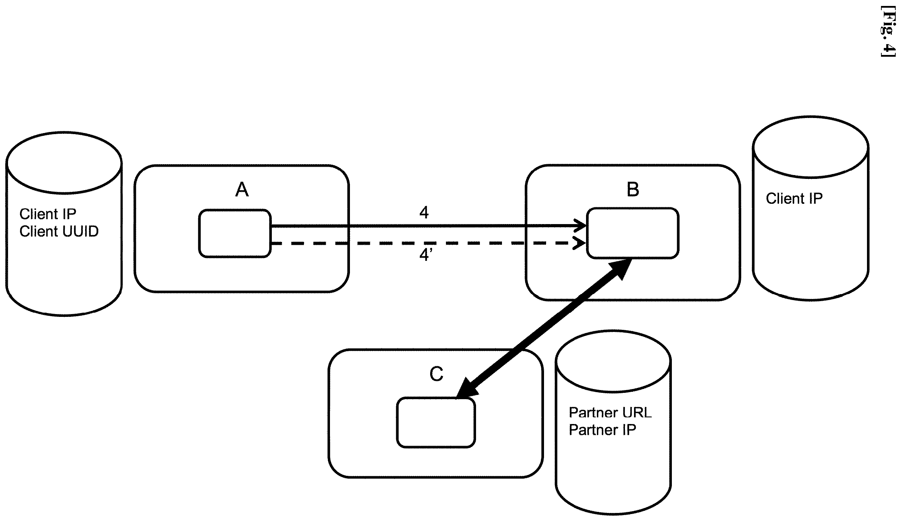

Dans une quatrième étape (symbolisée par la flèche référencée 4 sur la **figure 4****),** le serveur cible A vérifie si le terminal client C est enregistré ou non dans sa base de données clients. En cas de vérification positive (c'est-à-dire si le terminal client est bien enregistré), le serveur cible A effectue les étapes suivantes (avant le passage à la cinquième étape du procédé) :
- il enregistre l'adresse IP du terminal client C (« Client IP »), donnée par le protocole IP dans le cadre de la connexion entre le terminal client C et le serveur cible A ;
- il génère et enregistre un identifiant universel unique pour le terminal client C (noté « Client UUID ») ; et
- il s'authentifie auprès du serveur d'authentification B en vue de l'établissement entre eux d'une connexion sécurisée (lien sécurisé HTTPS, SSL, etc.). Pour cela, le serveur cible A peut fournir tout type d'élément d'authentification entre machines, comme par exemple une clé RSA.

En cas de vérification négative, le présent procédé d'authentification par triangulation s'arrête. Le serveur cible A renvoie au terminal client C soit une page d'invitation à créer un compte (en vue de passer à un procédé d'authentification classique avec saisie d'un login et d'un mot de passe), soit une page d'erreur, en fonction de l'implémentation choisie par l'éditeur du serveur cible A.

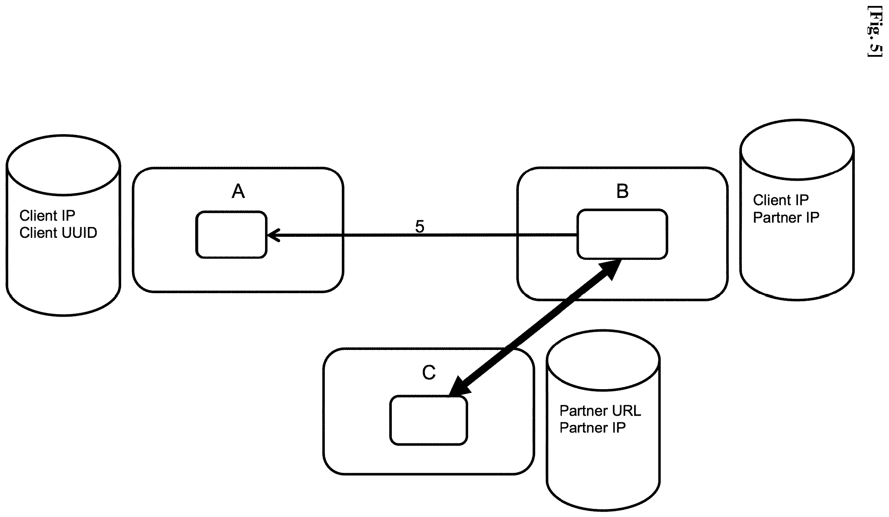

Dans une cinquième étape (symbolisée par la flèche référencée 5 sur la **figure 5**), le serveur d'authentification B vérifie que le serveur cible A est enregistré pour le service d'authentification. Le serveur d'authentification B renvoie un statut de connexion au serveur cible A. Si l'authentification et la connexion sont réussies, le serveur d'authentification B enregistre l'adresse IP du serveur cible A (« Partner IP »), donnée par le protocole IP dans le cadre de la connexion entre le serveur cible A et le serveur d'authentification B. Sinon, le présent procédé d'authentification par triangulation s'arrête.

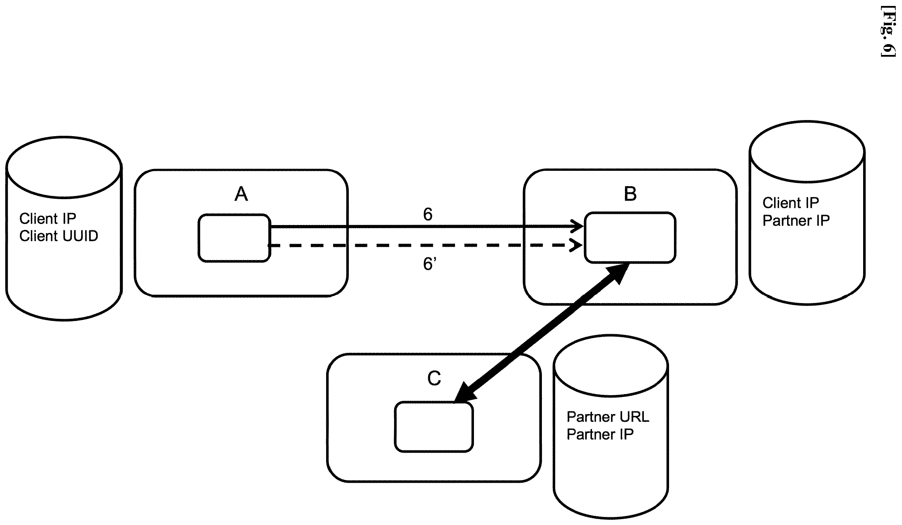

Dans une sixième étape (symbolisée par la flèche référencée 6 sur la **figure 6**), le serveur cible A transmet au serveur d'authentification B l'identifiant universel unique pour le terminal client C (« Client UUID »), ainsi que des informations d'identification de l'utilisateur du terminal client C (par exemple, nom, prénom, adresse email, adresse IP (« Client IP »), etc.). Cette transmission est comprise par le serveur d'authentification B comme une demande de mot de passe pour le terminal client C.

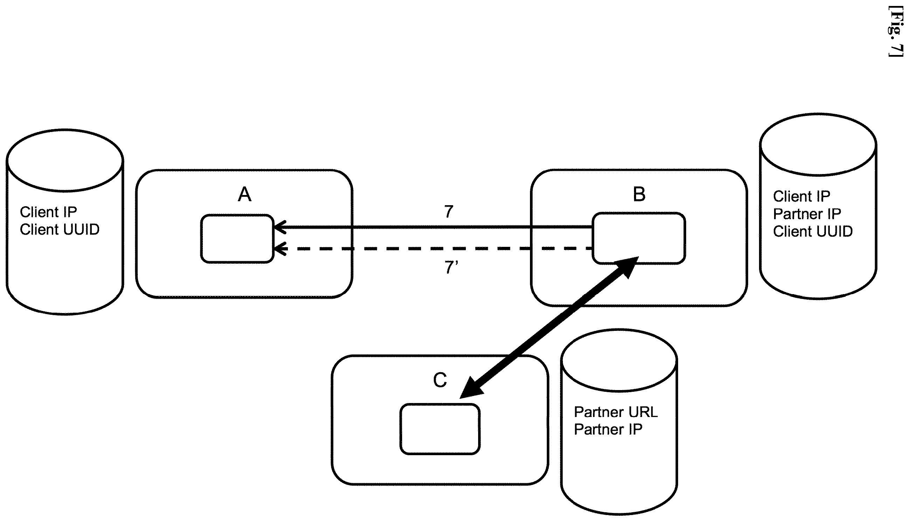

Dans une septième étape (symbolisée par la flèche référencée 7 sur la **figure 7**), le serveur d'authentification B effectue plusieurs vérifications :
- il vérifie si le serveur cible A est enregistré ou non pour le service d'authentification ;
- il vérifie si le terminal client C est enregistré ou non pour le service d'authentification (il utilise pour cela les informations d'identification de l'utilisateur du terminal client C, fournies le serveur cible A, et les compare aux informations d'identification dont il dispose pour les utilisateurs enregistrés pour le service d'authentification) ;
- il vérifie si le terminal client C est connecté ou non au service d'authentification (il utilise pour cela l'adresse IP du terminal client C fournie par le serveur cible A, et la compare aux adresses IP des terminaux clients connectés au service d'authentification).

Si ces vérifications sont positives, le serveur d'authentification B effectue les étapes suivantes (avant le passage à la huitième étape du procédé) :
- génère un mot de passe OTP (mot de passe à usage unique, ayant une durée de validité prédéterminée courte) ;
- envoie au serveur cible A un statut de vérification, ainsi que le mot de passe OTP généré ; et
- enregistre l'identifiant universel unique du terminal client C (« Client UUID »).

Si au moins une de ces vérifications est négative, le présent procédé d'authentification par triangulation s'arrête. Le serveur d'authentification B envoie au serveur cible A soit un message invitant le serveur cible A à proposer au terminal client C de passer à un procédé d'authentification classique du terminal client C (avec saisie d'un login et d'un mot de passe), soit une page d'erreur, en fonction de l'implémentation choisie par l'éditeur du serveur d'authentification B.

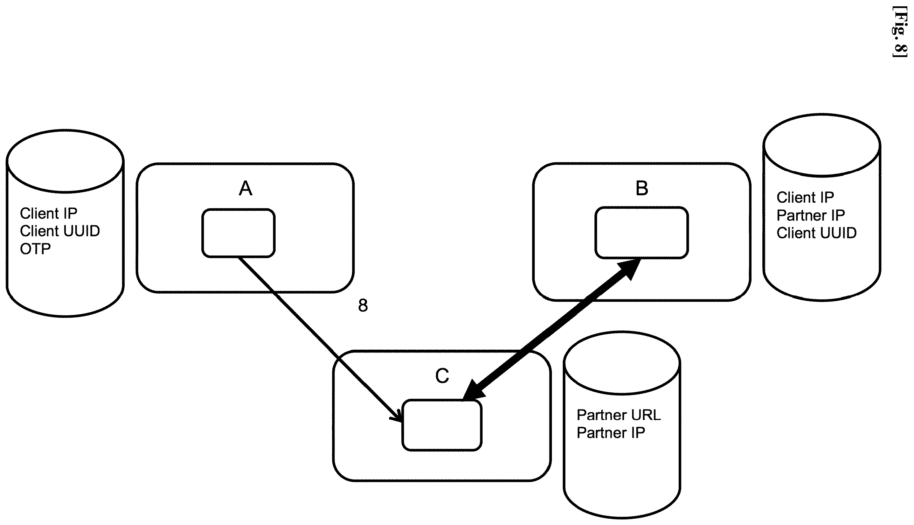

Dans une huitième étape (symbolisée par la flèche référencée 8 sur la **figure 8**), le serveur cible A enregistre le mot de passe OTP pour une durée limitée et retransmet au terminal client C l'identifiant universel unique de celui-ci (« Client UUID »). Puis on passe à la neuvième étape du procédé.

En cas d'au moins une vérification négative à la septième étape, la huitième étape est remplacée par une étape dans laquelle le serveur cible A renvoie au terminal client C soit une page d'invitation à créer un compte (en vue de passer à un procédé d'authentification classique avec saisie d'un login et d'un mot de passe), soit une page d'erreur, en fonction de l'implémentation choisie par l'éditeur du serveur cible A.

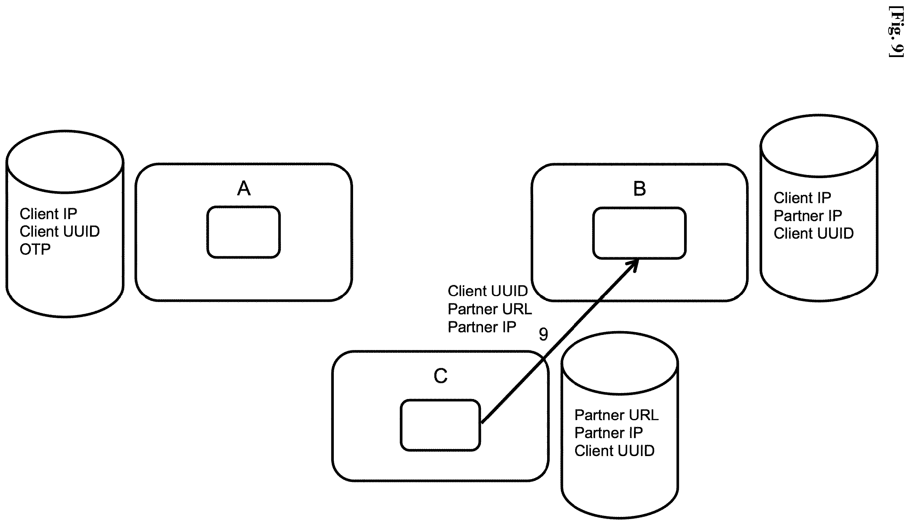

Dans une neuvième étape (symbolisée par la flèche référencée 9 sur la **figure 9**), le terminal client C enregistre l'identifiant universel (« Client UUID ») transmis par le serveur cible A et transmet au serveur d'authentification B une requête pour obtenir un mot de passe. La requête contient les informations « Partner URL », « Partner IP » et « Client UUID » définies plus haut.

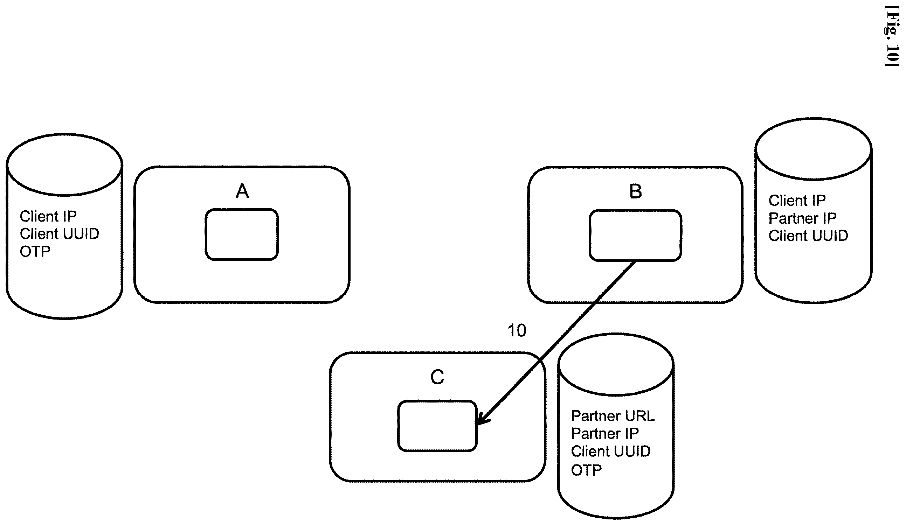

Dans une dixième étape (symbolisée par la flèche référencée 10 sur la **figure 10**)**,** le serveur d'authentification B effectue plusieurs vérifications :
- il vérifie si le terminal client C a envoyé ou non une requête en vue d'obtenir un mot de passe, pendant un laps de temps spécifié au cours de la même session HTTPS ;
- il vérifie si l'identifiant universel unique (« Client UUID ») fourni par le terminal client C correspond à celui fourni par le serveur cible A ; et
- il vérifie si le domaine du serveur cible A correspond au domaine contenu dans la requête transmise par le terminal client C (grâce à « Partner URL » et « Partner IP »).

Si ces vérifications sont positives, le serveur d'authentification B transmet le mot de passe OTP au terminal client C. Puis on passe à la onzième étape du procédé.

Si au moins une de ces vérifications est négative, le présent procédé d'authentification par triangulation s'arrête. Le serveur d'authentification B envoie au terminal client C soit un message l'invitant à passer à un procédé d'authentification classique auprès du serveur cible A (avec saisie d'un login et d'un mot de passe), soit une page d'erreur, en fonction de l'implémentation choisie par l'éditeur du serveur d'authentification B.

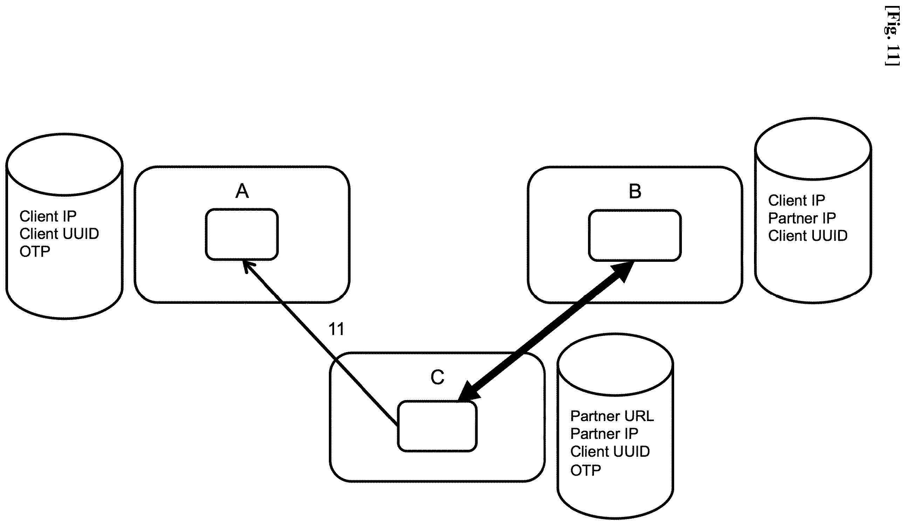

Dans une onzième étape (symbolisée par la flèche référencée 11 sur la **figure 11**), le terminal client C se connecte au serveur cible A avec son identifiant (« login 2 ») et le mot de passe OTP fourni par le serveur d'authentification B, en vue de l'établissement entre eux d'une connexion sécurisée (lien sécurisé HTTPS, SSL, etc.).

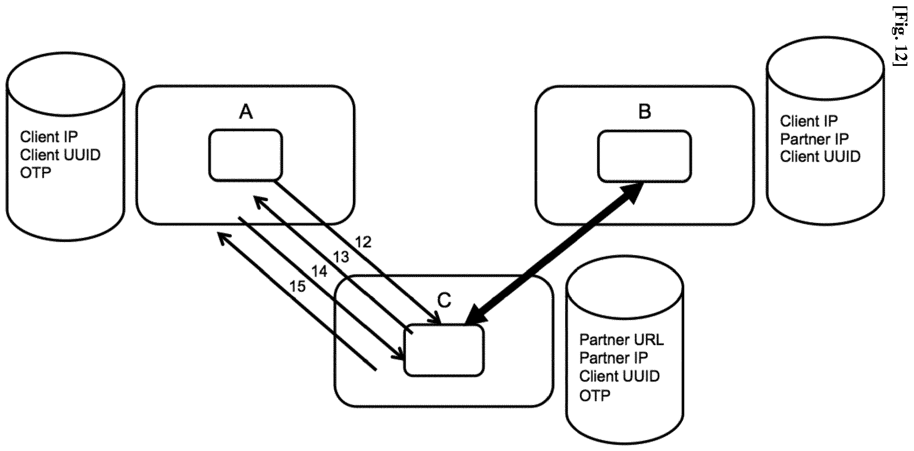

Dans une douzième étape (symbolisée par la flèche référencée 12 sur la **figure 12**), le serveur cible A effectue plusieurs vérifications :
- il vérifie si le terminal client C s'est connecté ou non pendant ledit laps de temps spécifié au cours de la même session HTTPS ;
- il vérifie si le mot de passe OTP fourni par le terminal client C correspond ou non à celui fourni par le serveur d'authentification B à l'étape de la figure 7 et stocké à l'étape de la figure 8.

Si ces vérifications sont positives, le serveur cible A envoie un statut de connexion au terminal client C. Le terminal client C est considéré comme authentifié auprès du serveur cible A (et le serveur cible A peut donc accepter une connexion sécurisée du terminal client C). Le serveur cible A a délégué au serveur d'authentification B son authentification du terminal client C.

Si au moins une de ces vérifications est négative, le présent procédé d'authentification par triangulation s'arrête. Le serveur cible A envoie au terminal client C soit un message l'invitant à passer à un procédé d'authentification classique (avec saisie d'un login et d'un mot de passe), soit une page d'erreur, en fonction de l'implémentation choisie par l'éditeur du serveur cible A.

Dans une treizième étape (symbolisée par la flèche référencée 13 sur la **figure 12**), le terminal client C demande au serveur cible A un contenu (ressource) protégé.

Dans une quatorzième étape (symbolisée par la flèche référencée 14 sur la **figure 12**), le serveur cible A transmet le contenu protégé au terminal client C.

Dans une quinzième étape (symbolisée par la flèche référencée 15 sur la **figure 12**), le terminal client C se déconnecte (log out) du serveur cible A. Si le terminal client C ne transmet pas d'autre demande de contenu au serveur cible A, ou bien si ledit laps de temps spécifié (au cours de la même session HTTPS) est écoulé, la connexion au serveur d'authentification B est perdue.

La solution proposée, notamment dans l'exemple décrit ci-dessus, permet en particulier d'appliquer le principe d'une authentification unique, par exemple à partir d'un ordinateur, d'une tablette ou d'un smartphone, à des serveurs cibles inadaptés aux systèmes connus de type SSO (nécessitant une affiliation et l'utilisation de jetons d'authentification signés).

Exemples d'application avec des serveurs cibles inadaptées aux systèmes connus de type SSO :
- la récupération de données protégées sur des serveurs cibles distincts, comme par exemple des relevés de compte répartis sur les serveurs de différentes banques.
- avec un serveur d'authentification embarqué sur une passerelle (box), l'accès à un ensemble de capteurs connectés (intégrant chacun un serveur cible) d'un site (résidentiel ou professionnel, voire industriel) si la passerelle est de type serveur ;
- à l'intérieur d'un espace résidentiel ou d'une entreprise, l'accès par un utilisateur à tous les serveurs cibles internes.

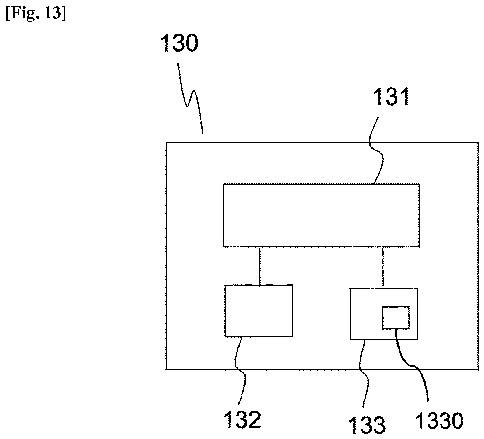

La **figure 13** présente un exemple de structure 130 pour implémenter chacune des trois entités (terminal client C, serveur cible A et serveur d'authentification B) impliquées dans le procédé d'authentification des figures 1 à 12.

Cette structure comprend une mémoire vive 132 (par exemple une mémoire RAM), une mémoire morte 133 (par exemple une mémoire ROM ou un disque dur) et une unité de traitement 131 (équipée par exemple d'un processeur, et pilotée par un programme d'ordinateur 1330 stocké dans la mémoire morte 133). A l'initialisation, les instructions de code du programme d'ordinateur 1330 sont par exemple chargées dans la mémoire vive 132 avant d'être exécutées par le processeur de l'unité de traitement 131.

Cette figure 13 illustre seulement une manière particulière, parmi plusieurs possibles, d'implémenter le terminal client C, le serveur cible A et le serveur d'authentification B. En effet, chacune de ces trois entités s'implémente indifféremment sur une machine de calcul reprogrammable (un ordinateur PC, un processeur DSP ou un microcontrôleur) exécutant un programme comprenant une séquence d'instructions, ou sur une machine de calcul dédiée (par exemple un ensemble de portes logiques comme un FPGA ou un ASIC, ou tout autre module matériel).

Dans le cas d'une implémentation sur une machine de calcul reprogrammable, le programme correspondant (c'est-à-dire la séquence d'instructions) pourra être stocké dans un médium de stockage amovible (tel que par exemple une disquette, un CD-ROM ou un DVD-ROM) ou non, ce médium de stockage étant lisible partiellement ou totalement par un ordinateur ou un processeur.

Plusieurs variantes de l'exemple décrit ci-dessus en relation avec les figures 1 à 12 peuvent être envisagés. On peut notamment prévoir des chronologies différentes pour les étapes.

Par exemple, dans une variante, c'est le serveur cible A qui génère le mot de passe (pour le terminal client C) et le transmet au serveur d'authentification B (qui lui-même le transmet au terminal client C).

Plus précisément, dans cette variante, les quatrième, sixième et septième étapes présentées plus haut (symbolisées par les flèches référencées 4, 6 et 7 sur les figures 4, 6 et 7), sont remplacées par des quatrième, sixième et septième étapes modifiées (symbolisées par les flèches référencées 4', 6' et 7' sur les figures 4, 6 et 7).

La quatrième étape modifiée (4') se distingue de la quatrième étape présentée plus haut (4) en ce que, en cas de vérification positive (c'est-à-dire si le terminal client est bien enregistré), le serveur cible A effectue en outre l'étape suivante (avant le passage à la cinquième étape du procédé) : il génère un mot de passe OTP.

La sixième étape modifiée (6') se distingue de la sixième étape présentée plus haut (6) en ce que le serveur cible A effectue en outre l'étape suivante : il transmet le mot de passe OTP au serveur d'authentification B.

La septième étape modifiée (7') se distingue de la septième étape présentée plus haut (7) en ce que, si les vérifications sont positives, le serveur d'authentification B n'effectue pas l'étape de génération d'un mot de passe OTP.

## Revendications

1. Procédé d'authentification d'un terminal client (C) par un serveur cible (A), comprenant les étapes suivantes :
- le terminal client (C) s'authentifie (1, 2) auprès d'un serveur d'authentification (B) ;
- le serveur cible (A) s'authentifie (4, 5) auprès du serveur d'authentification (B) ;
- le serveur d'authentification (B) et le serveur cible (A) partagent (7) un mot de passe pour le terminal client (C) ;
- sur requête du terminal client (C), le serveur d'authentification (B) transmet (10) le mot de passe partagé au terminal client (C) ;
- le terminal client (C) transmet (11) le mot de passe transmis par le serveur d'authentification au serveur cible (A); et
- sur réception d'un mot de passe depuis le terminal client (C), le serveur cible (A) détermine s'il y a une correspondance ou non entre le mot de passe partagé avec le serveur d'authentification (B) et le mot de passe reçu depuis le terminal client (C), et si ladite correspondance entre le mot de passe partagé et le mot de passe reçu existe, le terminal client (C) est authentifié (12) par le serveur cible (A).

2. Procédé selon la revendication 1, comprenant en outre les étapes suivantes :
- le serveur cible (A) demande (6) ledit mot de passe au serveur d'authentification (B), pour le terminal client (C) ; et
- le serveur d'authentification (B) génère ledit mot de passe.

3. Procédé selon la revendication 2, dans lequel l'étape (6) dans laquelle le serveur cible (A) demande ledit mot de passe au serveur d'authentification (B), fait suite à l'étape suivante :
- le terminal client (C) s'identifie (3) auprès du serveur cible (A), sans s'authentifier.

4. Procédé selon la revendication 1, comprenant les étapes suivantes :
- le serveur cible (A) génère (4') ledit mot de passe, pour le terminal client (C) ; et
- le serveur cible (A) transmet (6') ledit mot de passe au serveur d'authentification (B).

5. Procédé selon l'une quelconque des revendications 1 à 4, comprenant suivantes :
- le serveur cible (A) génère (4) un identifiant universel unique (Client UUID) pour le terminal client (C) et le transmet (6) au serveur d'authentification (B) ;
- le serveur d'authentification (B) transmet (8) ledit identifiant universel unique (Client UUID) au terminal client (C) ;
- le terminal client (C) envoie (9) une requête au serveur d'authentification (B) pour obtenir ledit mot de passe, ladite requête contenant ledit identifiant universel unique (Client UUID) ;
- le serveur d'authentification (B) vérifie (10) s'il y a une correspondance ou non entre l'identifiant universel unique (Client UUID) transmis par le terminal client (C) et l'identifiant universel unique (Client UUID) transmis par le serveur cible (A) ;
et dans lequel l'étape (10) de transmission du mot de passe depuis le serveur d'authentification (B) vers le terminal client (C) n'est pas exécutée si ladite correspondance entre identifiants universels uniques n'existe pas.

6. Procédé selon l'une quelconque des revendications 1 à 5, comprenant les étapes suivantes :
- le serveur d'authentification (B) récupère et enregistre (2) l'adresse IP (Client IP) du terminal client (C) ;
- le serveur cible (A) récupère et enregistre (4) l'adresse IP du terminal client (C) ;
- le serveur cible (A) envoie (6) l'adresse IP du terminal client (C) au serveur d'authentification (B) ;
- le serveur d'authentification (B) compare (7) l'adresse IP du terminal client (C) provenant du serveur cible (A) et l'adresse IP du terminal client (C) préalablement enregistrée, et vérifie s'il y a une correspondance ou non ;
et dans lequel l' étape de transmission du mot de passe depuis le serveur d'authentification (B) vers le serveur cible (A) n'est pas exécutée si ladite correspondance entre adresses IP du terminal client n'existe pas.

7. Procédé selon l'une quelconque des revendications 1 à 6, comprenant les étapes suivantes :
- le serveur d'authentification (B) récupère et enregistre au moins une information d'identification du serveur cible (A) ;
- le terminal client (C) récupère et enregistre (3) ladite au moins une information d'identification du serveur cible (A) ;
- le terminal client (C) envoie (9) une requête au serveur d'authentification (B) pour obtenir ledit mot de passe, ladite requête contenant ladite au moins une information d'identification du serveur cible (A) ;
- le serveur d'authentification (B) vérifie (10) s'il y a une correspondance ou non entre ladite au moins une information d'identification du serveur cible (A) transmise par le terminal client (C) et ladite au moins une information d'identification du serveur cible (A) préalablement enregistrée ;
et dans lequel l'étape (10) de transmission du mot de passe depuis le serveur d'authentification (B) vers le terminal client (C) n'est pas exécutée si ladite correspondance entre informations d'identification du serveur cible (A) n'existe pas.

8. Procédé selon la revendication 7, dans lequel ladite au moins une information d'identification du serveur cible (A) appartient au groupe comprenant une adresse IP (Partner IP) du serveur cible (A) et une adresse URL (Partner URL) du serveur cible (A).

9. Procédé selon l'une quelconque des revendications 1 à 8, comprenant les étapes suivantes :
- le serveur cible (A) obtient au moins une information d'identification d'au moins un utilisateur dudit terminal client (C) ;
- le serveur cible (A) envoie une requête au serveur d'authentification (B) pour obtenir ledit mot de passe, ladite requête contenant ladite au moins une information d'identification ;
- le serveur d'authentification (B) vérifie, en fonction de ladite au moins une information d'identification transmise par le serveur cible (A), si le terminal client (C) est enregistré ou non auprès du serveur d'authentification (B) ;
et dans lequel une étape (10) de transmission du mot de passe depuis le serveur d'authentification (B) vers le serveur cible (A) n'est pas exécutée si le terminal client (C) n'est pas enregistré auprès du serveur d'authentification (B).

10. Procédé selon l'une quelconque des revendications 1 à 9, dans lequel ledit mot de passe est un mot de passe à usage unique et à durée de validité prédéterminée.

11. Produit programme d'ordinateur, comprenant des instructions de code de programme pour la mise en œuvre du procédé selon au moins une des revendications 1 à 10, lorsque ledit programme est exécuté sur un ordinateur.

12. Médium de stockage lisible par ordinateur et non transitoire, stockant un produit programme d'ordinateur selon la revendication 11.

13. Système d'authentification d'un terminal client (C) par un serveur cible (A), comprenant le terminal client (C), le serveur cible (A) et un serveur d'authentification (B), dans lequel:
- le terminal client (C) comprend des moyens pour s'authentifier auprès du serveur d'authentification (B) ;
- le serveur cible (A) comprend des moyens pour s'authentifier auprès du serveur d'authentification (B) ;
- le serveur d'authentification (B) et le serveur cible (A) comprennent des moyens pour partager un mot de passe pour le terminal client (C);- le serveur d'authentification (B) comprend des moyens pour transmettre le mot de passe partagé au terminal client (C) sur requête du terminal client (C) ;
- le terminal client (C) comprend des moyens pour transmettre le mot de passe transmis par le serveur d'authentification au serveur cible (A) ; et
- le serveur cible (A) comprend des moyens pour déterminer, sur réception d'un mot de passe depuis le terminal client (C), s'il y a une correspondance ou non entre le mot de passe partagé avec le serveur d'authentification (B) et le mot de passe reçu depuis le terminal client (C), le terminal client (C) étant authentifié par le serveur cible (A) si ladite correspondance entre le mot de passe partagé et le mot de passe reçu existe.

## Patentansprüche

1. Verfahren zum Authentifizieren eines Client-Endgeräts (C) durch einen Zielserver (A), umfassend die folgenden Schritte:
- das Client-Endgerät (C) authentifiziert (1, 2) sich bei einem Authentifizierungsserver (B);
- der Zielserver (A) authentifiziert (4, 5) sich bei dem Authentifizierungsserver (B);
- der Authentifizierungsserver (B) und der Zielserver (A) teilen (7) ein Passwort für das Client-Endgerät (C);
- auf Anforderung des Client-Endgeräts (C) überträgt (10) der Authentifizierungsserver (B) das geteilte Passwort an das Client-Endgerät (C);
- das Client-Endgerät (C) überträgt (11) das von dem Authentifizierungsserver übertragene Passwort an den Zielserver (A); und
- beim Empfangen eines Passworts von dem Client-Endgerät (C) bestimmt der Zielserver (A), ob eine Übereinstimmung zwischen dem mit dem Authentifizierungsserver (B) geteilten Passwort und dem von dem Client-Endgerät (C) empfangenen Passwort vorliegt oder nicht, und wenn die Übereinstimmung zwischen dem geteilten Passwort und dem empfangenen Passwort vorliegt, wird das Client-Endgerät (C) durch den Zielserver (A) authentifiziert (12).

2. Verfahren nach Anspruch 1, umfassend ferner die folgenden Schritte:
- der Zielserver (A) fordert (6) das Passwort von dem Authentifizierungsserver (B) für das Client-Endgerät (C) an; und
- der Authentifizierungsserver (B) generiert das Passwort.

3. Verfahren nach Anspruch 2, wobei der Schritt (6), in dem der Zielserver (A) das Passwort von dem Authentifizierungsserver (B) anfordert, auf den folgenden Schritt folgt:
- das Client-Endgerät (C) identifiziert (3) sich bei dem Zielserver (A), ohne sich zu authentifizieren.

4. Verfahren nach Anspruch 1, umfassend die folgenden Schritte:
- der Zielserver (A) generiert (4') das Passwort für das Client-Endgerät (C); und
- der Zielserver (A) überträgt (6') das Passwort an den Authentifizierungsserver (B).

5. Verfahren nach einem der Ansprüche 1 bis 4, Folgendes umfassend:
- der Zielserver (A) generiert (4) einen Universally Unique Identifier (Client-UUID) für das Client-Endgerät (C) und überträgt (6) ihn an den Authentifizierungsserver (B) ;
- der Authentifizierungsserver (B) überträgt (8) den Universally Unique Identifier (Client-UUID) an das Client-Endgerät (C);
- das Client-Endgerät (C) sendet (9) eine Anforderung an den Authentifizierungsserver (B), um das Passwort zu erhalten, wobei die Anforderung den Universally Unique Identifier (Client-UUID) enthält;
- der Authentifizierungsserver (B) überprüft (10), ob eine Übereinstimmung zwischen dem von dem Client-Endgerät (C) übertragenen Universally Unique Identifier (Client-UUID) und dem von dem Zielserver (A) übertragenen Universally Unique Identifier (Client-UUID) vorliegt oder nicht;
und wobei der Schritt (10) des Übertragens des Passworts von dem Authentifizierungsserver (B) an das Client-Endgerät (C) nicht ausgeführt wird, wenn die Übereinstimmung zwischen Universally Unique Identifiers nicht besteht.

6. Verfahren nach einem der Ansprüche 1 bis 5, umfassend die folgenden Schritte:
- der Authentifizierungsserver (B) ruft ab und registriert (2) die IP-Adresse (Client-IP) des Client-Endgeräts (C);
- der Zielserver (A) ruft ab und registriert (4) die IP-Adresse des Client-Endgeräts (C);
- der Zielserver (A) sendet (6) die IP-Adresse des Client-Endgeräts (C) an den Authentifizierungsserver (B) ;
- der Authentifizierungsserver (B) vergleicht (7) die von dem Zielserver (A) kommende IP-Adresse des Client-Endgeräts (C) und die zuvor registrierte IP-Adresse des Client-Endgeräts (C) und überprüft, ob eine Übereinstimmung vorliegt oder nicht;
und wobei der Schritt des Übertragens des Passworts von dem Authentifizierungsserver (B) an den Zielserver (A) nicht ausgeführt wird, wenn die Übereinstimmung zwischen IP-Adressen des Client-Endgeräts nicht besteht.

7. Verfahren nach einem der Ansprüche 1 bis 6, umfassend die folgenden Schritte:
- der Authentifizierungsserver (B) ruft ab und registriert mindestens eine Identifikationsinformation des Zielservers (A);
- das Client-Endgerät (C) ruft ab und registriert (3) die mindestens eine Identifikationsinformation des Zielservers (A);
- das Client-Endgerät (C) sendet (9) eine Anforderung an den Authentifizierungsserver (B), um das Passwort zu erhalten, wobei die Anforderung die mindestens eine Identifikationsinformation des Zielservers (A) enthält;
- der Authentifizierungsserver (B) überprüft (10), ob eine Übereinstimmung zwischen der von dem Client-Endgerät (C) übertragenen mindestens einen Identifikationsinformation des Zielservers (A) und der zuvor registrierten mindestens einen Identifikationsinformation des Zielservers (A) vorliegt oder nicht;
und wobei der Schritt (10) des Übertragens des Passworts von dem Authentifizierungsserver (B) an das Client-Endgerät (C) nicht ausgeführt wird, wenn die Übereinstimmung zwischen Identifikationsinformationen des Zielservers (A) nicht besteht.

8. Verfahren nach Anspruch 7, wobei die mindestens eine Identifikationsinformation des Zielservers (A) zu der Gruppe gehört, die eine IP-Adresse (Partner-IP) des Zielservers (A) und eine URL-Adresse (Partner-URL) des Zielservers (A) umfasst.

9. Verfahren nach einem der Ansprüche 1 bis 8, umfassend die folgenden Schritte:
- der Zielserver (A) erhält mindestens eine Identifikationsinformation mindestens eines Benutzers des Client-Endgeräts (C);
- der Zielserver (A) sendet eine Anforderung an den Authentifizierungsserver (B), um das Passwort zu erhalten, wobei die Anforderung die mindestens eine Identifikationsinformation enthält;
- der Authentifizierungsserver (B) überprüft in Abhängigkeit von der von dem Zielserver (A) übertragenen mindestens einen Identifikationsinformation, ob das Client-Endgerät (C) bei dem Authentifizierungsserver (B) registriert ist oder nicht;
und wobei ein Schritt (10) des Übertragens des Passworts von dem Authentifizierungsserver (B) an den Zielserver (A) nicht ausgeführt wird, wenn das Client-Endgerät (C) nicht bei dem Authentifizierungsserver (B) registriert ist.

10. Verfahren nach einem der Ansprüche 1 bis 9, wobei das Passwort ein Einmalpasswort mit vorbestimmter Gültigkeitsdauer ist.

11. Computerprogrammprodukt, das Programmcodeanweisungen umfasst, die bei der Ausführung des Programms auf einem Computer das Verfahren nach mindestens einem der Ansprüche 1 bis 10 durchführen.

12. Computerlesbares und nichtflüchtiges Speichermedium, das ein Computerprogrammprodukt nach Anspruch 11 speichert.

13. System zur Authentifizierung eines Client-Endgeräts (C) durch einen Zielserver (A), umfassend das Client-Endgerät (C), den Zielserver (A) und einen Authentifizierungsserver (B), wobei:
- das Client-Endgerät (C) Mittel umfasst, um sich bei dem Authentifizierungsserver (B) zu authentifizieren;
- der Zielserver (A) Mittel umfasst, um sich bei dem Authentifizierungsserver (B) zu authentifizieren;
- der Authentifizierungsserver (B) und der Zielserver (A) Mittel umfassen, um ein Passwort für das Client-Endgerät (C) zu teilen; - der Authentifizierungsserver (B) Mittel umfasst, um das geteilte Passwort auf Anforderung des Client-Endgeräts (C) an das Client-Endgerät (C) zu übertragen;
- das Client-Endgerät (C) Mittel umfasst, um das von dem Authentifizierungsserver übertragene Passwort an den Zielserver (A) zu übertragen; und
- der Zielserver (A) Mittel umfasst, um beim Empfangen eines Passworts von dem Client-Endgerät (C) zu bestimmen, ob eine Übereinstimmung zwischen dem mit dem Authentifizierungsserver (B) geteilten Passwort und dem von dem Client-Endgerät (C) empfangenen Passwort vorliegt oder nicht, wobei das Client-Endgerät (C) durch den Zielserver (A) authentifiziert wird, wenn die Übereinstimmung zwischen dem geteilten Passwort und dem empfangenen Passwort besteht.

## Claims

1. Method of authentication of a client terminal (C) by a target server (A), comprising the following steps:
- the client terminal (C) authenticates (1, 2) itself to an authentication server (B);
- the target server (A) authenticates (4, 5) itself to the authentication server (B);
- the authentication server (B) and the target server (A) share (7) a password for the client terminal (C);
- on request by the client terminal (C), the authentication server (B) transmits (10) the shared password to the client terminal (C);
- the client terminal (C) transmits (11) the password transmitted by the authentication server to the target server (A); and
- on receipt of a password from the client terminal (C), the target server (A) determines whether or not there is a match between the password shared with the authentication server (B) and the password received from the client terminal (C), and if said match between the shared password and the received password exists, the client terminal (C) is authenticated (12) by the target server (A).

2. Method according to Claim 1, further comprising the following steps:
- the target server (A) requests (6) said password from the authentication server (B), for the client terminal (C); and
- the authentication server (B) generates said password.

3. Method according to Claim 2, wherein the step (6) in which the target server (A) requests said password from the authentication server (B) follows the following step:
- the client terminal (C) identifies itself (3) to the target server (A), without authenticating itself.

4. Method according to Claim 1, comprising the following steps:
- the target server (A) generates (4') said password, for the client terminal (C); and
- the target server (A) transmits (6') said password to the authentication server (B).

5. Method according to any of Claims 1 to 4, comprising the following:
- the target server (A) generates (4) a universally unique identifier (Client UUID) for the client terminal (C) and transmits (6) it to the authentication server (B);
- the authentication server (B) transmits (8) said universally unique identifier (Client UUID) to the client terminal (C);
- the client terminal (C) sends (9) a request to the authentication server (B) to obtain said password, said request containing said universally unique identifier (Client UUID);
- the authentication server (B) verifies (10) whether or not there is a match between the universally unique identifier (Client UUID) transmitted by the client terminal (C) and the universally unique identifier (Client UUID) transmitted by the target server (A);
and wherein the step (10) of transmitting the password from the authentication server (B) to the client terminal (C) is not executed if said match between universally unique identifiers does not exist.

6. Method according to any of Claims 1 and 5, comprising the following steps:
- the authentication server (B) retrieves and records (2) the IP address (Client IP) of the client terminal (C);
- the target server (A) retrieves and records (4) the IP address of the client terminal (C);
- the target server (A) sends (6) the IP address of the client terminal (C) to the authentication server (B);
- the authentication server (B) compares (7) the IP address of the client terminal (C) coming from the target server (A) and the IP address of the client terminal (C) recorded beforehand, and verifies whether or not there is a match;
and wherein the step of transmitting the password from the authentication server (B) to the target server (A) is not executed if said match between IP addresses of the client terminal does not exist.

7. Method according to any of Claims 1 and 6, comprising the following steps:
- the authentication server (B) retrieves and records at least one piece of identification information of the target server (A);
- the client terminal (C) retrieves and records (3) said at least one piece of identification information of the target server (A);
- the client terminal (C) sends (9) a request to the authentication server (B) to obtain said password, said request containing said at least one piece of identification information of the target server (A);
- the authentication server (B) verifies (10) whether or not there is a match between said at least one piece of identification information of the target server (A) transmitted by the client terminal (C) and said at least one piece of identification information of the target server (A) recorded beforehand;
and wherein the step (10) of transmitting the password from the authentication server (B) to the client terminal (C) is not executed if said match between pieces of identification information of the target server (A) does not exist.

8. Method according to Claim 7, wherein said at least one piece of identification information of the target server (A) belongs to the group containing an IP address (Partner IP) of the target server (A) and a URL address (Partner URL) of the target server (A).

9. Method according to any of Claims 1 and 8, comprising the following steps:
- the target server (A) obtains at least one piece of identification information of at least one user of said client terminal (C);
- the target server (A) sends a request to the authentication server (B) to obtain said password, said request containing said at least one piece of identification information;
- the authentication server (B) verifies, depending on said at least one piece of identification information transmitted by the target server (A), whether or not the client terminal (C) has registered with the authentication server (B);
and wherein a step (10) of transmitting the password from the authentication server (B) to the target server (A) is not executed if the client terminal (C) has not registered with the authentication server (B).

10. Method according to any of Claims 1 to 9, wherein said password is a one-time password of predetermined length of validity.

11. Computer program product, comprising program code instructions for implementing the method according to at least one of Claims 1 to 10, when said program is executed on a computer.

12. Non-transient and computer-readable storage medium, storing a computer program product according to Claim 11.

13. System for performing authentication of a client terminal (C) by a target server (A), comprising the client terminal (C), the target server (A) and an authentication server (B), wherein:
- the client terminal (C) comprises means for authenticating itself to the authentication server (B);
- the target server (A) comprises means for authenticating itself to the authentication server (B);
- the authentication server (B) and the target server (A) comprise means for sharing a password for the client terminal (C); - the authentication server (B) comprises means for transmitting the shared password to the client terminal (C) on request by the client terminal (C);
- the client terminal (C) comprises means for transmitting the password transmitted by the authentication server to the target server (A); and
- the target server (A) comprises means for determining, on receipt of a password from the client terminal (C), whether or not there is a match between the password shared with the authentication server (B) and the password received from the client terminal (C), the client terminal (C) being authenticated by the target server (A) if said match between the shared password and the received password exists.
